# EUROPÄISCHE PATENTSCHRIFT

(11) **EP 1 560 725 B1**
(45) Veröffentlichungstag und Bekanntmachung des Hinweises auf die Patenterteilung: **06.01.2010**
(21) Anmeldenummer: 03789037.3
(22) Anmeldetag: 13.11.2003
(51) Int. Cl.: B60J 5/04, B60R 13/02, E05B 65/20

(54) **KRAFTFAHRZEUGTÜR**
VEHICLE DOOR
PORTIERE D'AUTOMOBILE

(30) Priorität: 13.11.2002 DE 10253636
(43) Veröffentlichungstag der Anmeldung: 10.08.2005
(73) Patentinhaber: Faurecia Innenraum Systeme GmbH, 76767 Hagenbach (DE)
(72) Erfinder: GABSCH, Steffen, 36219 Cornberg (DE); VOIGT, Martin, 31162 Bad Salzdetfurth (DE); KLUSMANN, Rainer, 34233 Fuldatal (DE)
(74) Vertreter: Pfenning, Meinig & Partner GbR
(86) Internationale Anmeldenummer: PCT/EP2003/012698
(87) Internationale Veröffentlichungsnummer: WO 2004/043722

(56) Entgegenhaltungen:
- EP-A- 1 197 366
- DE-A- 19 916 203
- DE-C- 10 048 567
- US-A- 5 377 450
- US-A- 6 073 990

## Beschreibung

Die vorliegende Erfindung betrifft eine Kraftfahrzeugtür nach dem Oberbegriff des Anspruchs 1.

EP 1 197 366 (KASAI KOGYO Co.) beschreibt eine solche Kraftfahrzeugtür.

Kraftfahrzeugtüren, sowohl für PKW als auch für LKW weisen in der Regel Verkleidungen zum Fahrgastinnenraum hin auf. Diese Verkleidungen nehmen z.B. einen Betätigungshebel für die Türöffnung auf, welcher in einem zur Tür gehörigen Lagerbock um eine Schwenkachse drehbar gelagert ist. Hierbei ergibt sich regelmäßig eine umlaufende Fuge im Bereich zwischen dem Betätigungshebel und der diesen umschließenden Verkleidung.

Insbesondere bei qualitativ hochwertigen Fahrzeugen steht im Vordergrund, dass zwischen dem Betätigungshebel und anschließenden Teilen der Verkleidung kein unbefriedigendes Fugenbild (zu große Fuge, wechselnde Fugenbreite) auftritt.

Hierbei ist zum einen problematisch, dass, da mehrere Bauteile beteiligt sind, für sämtliche Einzelbauteile üblicherweise hohe Herstelltoleranzen zu fordern sind, damit sich später im Zusammenspiel ein befriedigendes Fugenbild ergibt.

Abweichend hiervon ist es auch möglich, einen Lagerbock in Schalenform zu bilden (also quasi eine separate Türinnenbetätigung), welche die Türinnenverkleidung zum Fahrzeuginnenraum hin hintergreift. Hierbei ist lediglich eine Fuge zwischen dem Betätigungshebel und dem direkt sichtbaren umliegenden Lagerbock herzustellen, aufgrund der Kürze der Toleranzkette ist das Fugenbild hier produktionstechnisch einfach zu realisieren. Problematisch ist hierbei jedoch, dass sich eine relativ "klobige" Optik ergibt, welche sich aus dem Hineinragen der Lagerschale in den Fahrzeuginnenraum ergibt und somit ein harmonisches Gesamtbild verhindert. Außerdem ist problematisch, dass die Lagerschale regelmäßig aus relativ festen Kunststoffen hergestellt werden muss, welche kostenintensiv sind und (bei hohen Oberflächenanforderungen) zusätzlich lackiert werden müssen, hierdurch entstehen wiederum höhere Kosten.

Selbstverständlich ist es auch möglich, die gesamte Türinnenverkleidung aus einem solchen hochfesten Kunststoff (wie z.B. Polyamid) zu gestalten, hierdurch ergeben sich jedoch noch höhere Herstellungskosten.

Ein anderer Weg besteht darin, aufgrund von "geschwungenen" Fugen zwischen Betätigungshebel und anschließender Verkleidung zu erreichen, dass selbst bei ungleichmäßigen Fugen diese optisch nicht zutage treten. Problematisch ist hierbei jedoch, dass die Geometrien bei der Gestaltung der Türverkleidung stark eingeschränkt sind.

Der vorliegenden Erfindung liegt daher die Aufgabe zugrunde, eine kostengünstig herzustellende Tür für Kraftfahrzeuge zu schaffen, welche optisch höchste Anforderungen an Fugenmaße erfüllt.

Diese Aufgabe wird durch eine Tür mit den Merkmalen des Anspruches 1 gelöst.

Dadurch, dass bei einer Kraftfahrzeugtür nach dem Oberbegriff des Anspruchs 1 die Achse zusätzlich über Fixierlager mit der Verkleidung verbunden ist, ist es leicht möglich, ein gleichmäßiges Fugenbild zu erreichen. Dies liegt daran, dass die Toleranzkette quasi "verkürzt" wird, d.h., dass eine zusätzliche direkte Kopplung zwischen der Verkleidung und der Achse des Betätigungshebels geschaffen wird (ohne den "Umweg" über den Lagerblock). Hierdurch wird es nicht mehr notwendig, sämtliche Bauteile in einer langen Toleranzkette mit hohen Herstell- und Fügetoleranzen zu fordern, um insgesamt ein harmonisches Fugenbild zu erreichen. Die Reduzierung der auftretenden Toleranzen wird somit ohne Toleranzeinschränkung in der Fertigung erreicht.

Es ist hierbei nicht notwendig, die Verkleidung selbst aus einem besonders stabilen kostenaufwendigen Material zu fertigen. Die Fixierlager übernehmen lediglich die Positionierung bzw. Zentrierung von Betätigungshebel zu sich anschließender Verkleidung, die eigentliche Kraftaufnahme kann auf konventionelle Weise z.B. über Schraubdome an der der Fahrzeuginnenraumseite abgewandten Seite der Verkleidung stattfinden. Insbesondere wird es bei der erfindungsgemäßen Lösung möglich, den Betätigungshebel bündig in eine Verkleidung einzupassen, es sind keine in den Fahrzeuginnenraum hineinragenden Lagerböcke etc. notwendig.

Vorteilhafte Weiterbildungen der vorliegenden Erfindung werden in den abhängigen Ansprüchen angegeben.

Eine vorteilhafte Weiterbildung sieht vor, dass die Verkleidung aus Polypropylen ist. Dies ist ein kostengünstig herstellbarer Kunststoff, welcher auch ohne Lackierung eine befriedigende Oberflächengüte aufweist. Dieser ist insbesondere geeignet für Kraftfahrzeuge wie Lastkraftwagen oder Kleintransporter, Kleinbusse etc.

Eine weitere vorteilhafte Weiterbildung sieht vor, dass die Verkleidung mehrteilig ist. Diese Verkleidung kann z.B. aus einem ersten und einem zweiten Teil bestehen, welche beide eine zum Fahrzeuginnenraum hin gerichtete Oberfläche aufweisen. Auf diese Weise wird es leicht möglich, zweifarbige Türen herzustellen. Das erste und das zweite Teil können z.B. aus jeweils unterschiedlich eingefärbtem Kunststoff bestehen, es ist somit ohne aufwendige Lackierung möglich, das optische Erscheinungsbild der Tür farblich zu beeinflussen. Hierbei ist es besonders vorteilhaft, dass das erste Teil als Oberteil ausgeführt ist, welches eine innere Fensterbrüstung der Kraftfahrzeugtür bildet, und das Unterteil von einem Grundträger gebildet wird, welcher sich vom Oberteil ausgehend nach unten fortsetzt bis zur Türunterkante. Dieser Grundträger kann Öffnungen für Lautsprecher enthalten bzw. Ablagen etc.

Eine besonders vorteilhafte Weiterbildung sieht vor, dass am zweiten Teil der Verkleidung, also beispielsweise dem Grundträger, Schraubdome oder dergleichen (Nietaufnahmen etc.) angeordnet sind zum kraftschlüssigen Befestigen des Lagerbocks am zweiten Teil. Wesentlich ist hierbei, dass durch diese z.B. Schraubverbindung lediglich eine Verspannung stattfindet, um den Lagerbock zu halten, die eigentliche geometrische Zentrierung bzw. genaue Bestimmung der Lage findet durch die oben bezeichneten Fixierlager statt. Daher ist es wesentlich, dass diese Schraubdome oder dergleichen in ihren nicht festgezogenen Zustand spielbehaftet sind, damit je nach Vorgabe der zusätzlichen Fixierlager die kraftaufnehmende Verschraubung in der unterschiedlichen Lagen vorgenommen werden kann (hierdurch wird eine mechanische Überbestimmung vermieden). Es ist besonders vorteilhaft, dass dann am ersten Teil der Verkleidung, also hier z.B. der Fensterbrüstung, die Fixierlager zum eindeutigen Positionieren der Achse bezüglich der Verkleidung angebracht sind.

Dies ist auch vorteilhaft bei der Montage, so wird der Lagerbock z.B. in das erste Teil eingeführt und dadurch positioniert, hierzu können die Fixierlager z.B. eine Einlaufschräge aufweisen. Die danach folgende Verschraubung ist jedoch nicht toleranzmaßgebend, sondern dient nur zur Verspannung, es sei nochmals betont, dass die eigentliche Zentrierung bzw. Fixierung bzw. Festlegung des Spaltmaßes durch das Fixierlager gewährleistet wird.

Eine weitere vorteilhafte Weiterbildung sieht vor, dass der Lagerbock bezüglich der Verkleidung zur Fahrzeugaußenseite hin versenkt ist. Dadurch, dass der Lagerbock bzw. die in ihm enthaltene Mulde für den Betätigungshebel, in welchen z.B. eine Bedienerhand eingreift, nicht teilweise zum Fahrzeuginnenraum hineinragt, muss dieses Teil auch nicht aufwendig lackiert oder sonst bearbeitet werden, um Anforderungen an bestimmte Oberflächengüten zu erreichen, da die verdeckte Mulde praktisch nicht einsehbar ist.

Eine vorteilhafte Weiterbildung sieht vor, dass der Lagerbock bzw. der Betätigungshebel aus Polyamid ist. Dieser Kunststoff hat gute Festigkeitseigenschaften. Bei sehr hohen Anforderungen an die Oberflächengüte kann z.B. der Betätigungshebel auch noch lackiert werden.

Eine weitere vorteilhafte Weiterbildung sieht, dass die Fixierlager als einseitig offene Aufnahmen ausgeführt sind. Diese können z.B. "U"-förmig sein, eventuell mit Einlaufschrägen und einer Rastauswölbung. Hierdurch ist es möglich, den Lagerbock zu positionieren, bevor er dann in dieser Lage mit der Verkleidung verschraubt wird. Zusätzlich ist eine Festlegung der Achsposition in axialer Richtung möglich.

Weitere vorteilhafte Weiterbildungen der vorliegenden Erfindung werden in den übrigen abhängigen Patentansprüchen angegeben.

Die Erfindung wird nun anhand mehrerer Figuren erläutert. Es zeigen:
- Fig. 1: eine Ansicht eines Ausschnittes einer erfindungsgemäßen Kraftfahrzeugtür vom Fahrzeuginnenraum aus,
- Fig. 2a: ein Querschnitt durch die in Fig. 1 gezeigte Kraftfahrzeugtür,
- Fig. 2b: eine Detailansicht eines erfindungsgemäßen Fixierlagers,
- Fig. 3: eine alternative Ausführungsform mit ungünstigeren Toleranzverhältnissen.

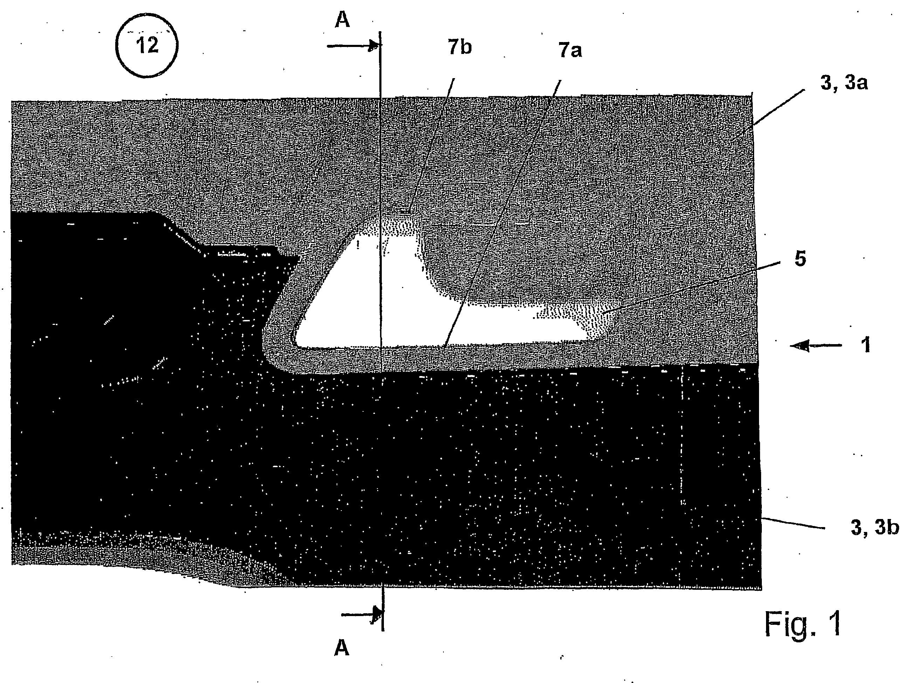

Fig. 1 zeigt eine erfindungsgemäße Kraftfahrzeugtür 1, welche zum Fahrgastinnenraum eines Kraftfahrzeugs hin eine Verkleidung 3 aufweist. Die Verkleidung ist in Fig. 1 vom Fahrzeuginnenraum aus gesehen, die Verkleidung 3 ist zweiteilig. Die Verkleidung besteht aus einem Oberteil 3a sowie einem Unterteil 3b, welche fest miteinander verklebt oder verschweißt sind. Das Oberteil 3a bildet eine Fensterbrüstung zu einem Fenster 12 des Kraftfahrzeugs hin. Das Unterteil bildet einen Grundträger der Verkleidung, in welchem in Fig. 1 nicht dargestellte Ablagen bzw. Lautsprecheröffnungen angebracht sind. Die Verkleidung insgesamt ist auf einem Türmodul bzw. einem Rahmen der Kraftfahrzeugtür befestigt. Die Teile 3a und 3b sind jeweils aus unlackiertem Polypropylen. Beide Teile sind mit unterschiedlicher Farbe eingefärbt, so dass sich in der Verkleidung eine unterschiedliche Farbgebung für die Brüstung bzw. das Grundteil in der Ansicht ergibt.

Von dem Oberteil 3a umgeben ist ein in einem Lagerbock gelenkig gelagerter Betätigungshebel 5 angeordnet. Dieser Betätigungshebel bildet bereichsweise eine Fuge mit dem umgebenden Oberteil 3a, diese Fuge wird in ihrem oberen Bereich mit 7b und in ihrem unteren Bereich mit 7a bezeichnet.

Es ist das Hauptziel der vorliegenden Erfindung, diese Fuge über ihre gesamte Länge möglichst gleichmäßig zu gestalten, wobei hierbei für möglichst geringen Kosten eine gleichmäßige Optik sich ergeben soll.

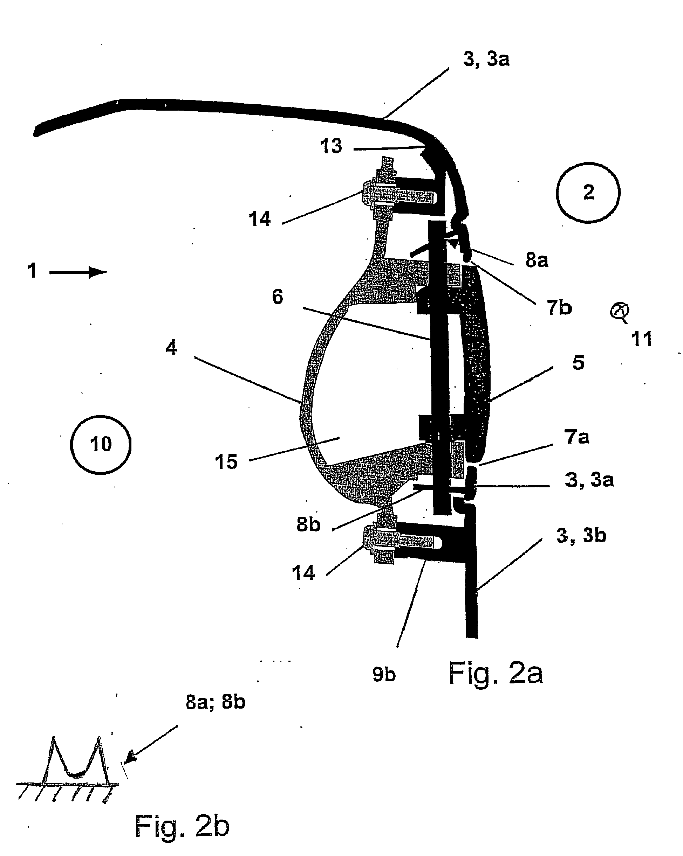

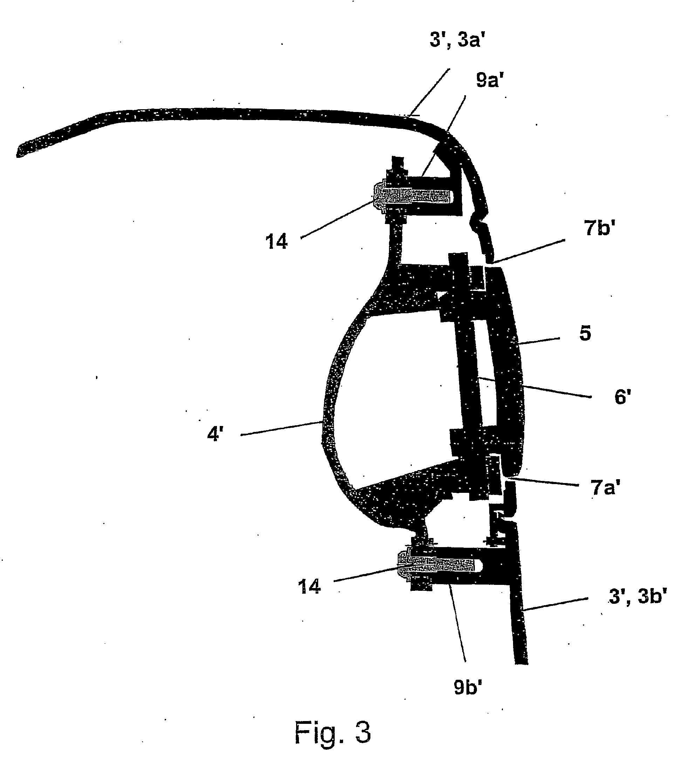

Der Betätigungshebel 5 ist im Wesentlichen bündig zu der Verkleidung angeordnet (siehe Fign. 2a und 3), unterhalb des Betätigungshebels ist eine zu dem Lagerbock 4 gehörige Mulde angeordnet, in welche eine Bedienerhand eingreifen kann, um den Betätigungshebel 5 zu hintergreifen.

Sowohl der Lagerbock als auch der Betätigungshebel 5 sind aus unlackiertem bzw. lackiertem Polyamid.

Fig. 2a zeigt einen Querschnitt gemäß A-A (siehe Fig. 1) durch die erfindungsgemäße Kraftfahrzeugtür. Hierin ist ein Teil der Kraftfahrzeugtür 1 zu sehen, welche zum Fahrgastinnenraum (2) des Kraftfahrzeugs hin eine Verkleidung 3 (bestehend aus den Teilen 3a und 3b) aufweist. Die Verkleidung 3 ist mit dem Lagerbock 4 verbunden bzw. über Schrauben verbindbar. In dem Lagerbock 4 ist der Betätigungshebel 5 um eine Drehachse 6 schwenkbar gelagert, wobei zwischen Betätigungshebel 5 und Verkleidung 3 zumindest bereichsweise eine Fuge 7a bzw. 7b gegeben ist. Die Achse 6 ist zusätzlich über Fixierlager 8a bzw. 8b mit der Verkleidung verbunden.

Nach dieser generellen Beschreibung wird Fig. 2a nun noch detaillierter erläutert. Es gut erkennbar, dass die Verkleidung 3 aus dem Oberteil 3a sowie dem Unterteil 3b besteht. Oberteil 3a und Unterteil 3b sind z.B. im Bereich 13 miteinander verschweißt. Das Unterteil 3b weist Schraubdome 9a sowie 9b auf, in welche Schrauben 14 eingeschraubt sind. Diese Schrauben 14 hintergreifen Bohrungen im Lagerbock 4 und fixieren somit im festgeschraubten Zustand den Lagerbock 4 an den Schraubdomen 9a bzw. 9b. Die Durchgangsbohrungen in dem Lagerbock 4 haben einen größeren Durchmesser als die Schäfte der Schrauben 14, so dass bei nicht angezogenen Schrauben keine exakte geometrische Festlegung des Lagerbocks 4 an der Verkleidung 3 gegeben ist, sondern vielmehr eine "spielbehaftete" Kopplung.

Der Lagerbock 4 weist eine Mulde 15 auf, welche gegenüber dem Fahrzeuginnenraum 2 zurückversetzt ist. Insgesamt ist der Lagerbock 4 bezüglich der Verkleidung zur Fahrzeugaußenseite 10 hin insgesamt versenkt, so dass diese vom Innenraum aus für Fahrzeuginsassen praktisch nicht sichtbar ist. Im Lagerbock 4 ist über zwei Durchgangsöffnungen eine aus Kunststoff oder Metall bestehende Achse gelagert, auf welcher der Betätigungshebel 5 schwenkbar gelagert ist.

Diese Achse 6 ist außerdem in Fixierlagern 8a und 8b gelagert. Diese Fixierungslager 8a und 8b gehören zu dem Oberteil bzw. der Fensterbrüstung 3a. Es handelt sich hierbei beispielsweise um gespritzte Stege des Oberteils 3a.

Die Fixierlager 8a und 8b sind z.B. als "U"-förmige, also einseitig offene Aufnahmen ausgeführt (siehe Fig. 2b). Diese können, wie in Fig. 2b gezeigt, im Bereich der Schenkel des "U" Einlaufschrägen aufweisen und dienen der Fixierung der Achse 6.

Bei der Montage des in Fig. 2a gezeigten Gegenstandes werden zunächst Oberteil 3a und Unterteil 3b zu einer fertigen Verkleidung 3 verschweißt. Dann wird der Betätigungshebel 5 über die Achse 6 in dem Lagerbock 4 montiert. Dann wird von der Rückseite der Verkleidung her (also Richtung des Bezugszeichens 10 in Fig. 2a) der Lagerbock 4 dadurch fixiert, dass die Achse 6 in den zum Bezugszeichen 10 hin offenen Fixierlagern 8a und 8b festgelegt wird. Durch diese Fixierung wird die geometrische Lage der Achse genau definiert, d.h. die Achse genau zentriert. In dieser Lage werden dann die Schrauben 14 durch die Durchgangsöffnungen des Lagerbocks 4 in die Schraubdome 9a bzw. 9b geschraubt und festgezogen, so dass eine kraftschlüssige Fixierung des Lagerbocks in der durch die Fixierlager 8a bzw. 8b vorgegebenen Stellung erfolgt.

Durch die kurze "Toleranzkette" zwischen dem Betätigungshebel 5 sowie der Verkleidung 3 (bzw. dem Oberteil 3a) wird gewährleistet, dass auch ohne hohe Herstell- und Fügetoleranzen die Fuge 7a bzw. 7b gleichmäßig verläuft. Somit ergibt sich ein harmonisches Aussehen des Betätigungshebels 5 in der Verkleidung; dies gilt sowohl für die Fugen als auch für die flächige Einbindung des Betätigungshebels bezüglich der Verkleidung. In Fig. 2a ist gut zu sehen, dass der Betätigungshebel in Querschnittsrichtung senkrecht zur Fahrzeuglängsachse 11 im Wesentlichen bündig mit der Verkleidung abschließt.

Abschließend wird zu Vergleichszwecken nochmals ein Schnitt nach Fig. 3 gezeigt. Hierbei werden zu Fig. 2a gleiche Teile mit gleichen Bezugsziffern bezeichnet. Der in Fig. 3 gezeigte Lagerbock 4' hat über eine Achse 6' einen Betätigungshebel 5 gelagert.

Die Schraubdome 9a' bzw. 9b' nehmen Schrauben 14 auf, welche durch Durchgangsöffnungen des Lagerbocks 4' geführt sind und den Lagerbock 4' hintergreifen. Die Federdome greifen im Wesentlichen formschlüssig in die Durchgangsöffnungen des Lagerbockes 4' ein, so dass dessen geometrische Lage hierdurch bereits vollständig festgelegt wird. Durch die Schrauben 14 erfolgt abschließend eine Sicherung gegen Lösen.

Diese Konstruktion hat den Nachteil, dass die Spalten 7a' bzw. 7b' nur dann eine befriedigende Maßgüte aufweisen, wenn eine Vielzahl von Bauteilen (Schraubdome 9a', 9b', Lagerbock 4', Achse 6', Betätigungshebel 5) sehr genau gearbeitet sind und auch bestimmungsgemäß gefügt wurden. Treten Fehler in dieser relativ "langen" Toleranzkette auf, führt dies unweigerlich zu Maßabweichungen bei den Spalten 7a' bzw. 7b', welche sich in einem unbefriedigenden optischen Erscheinungsbild äußern bzw. sogar zu Verklemmungen des Betätigungshebels 5 an der Verkleidung 3' führen können.

Der wesentliche Vorteil der Konstruktion nach Fig. 2a ist, dass die Toleranzkette durch die direkte Kopplung über die Fixierlager 8a bzw. 8b zur Achse 6 hin "verkürzt" wird, so dass auch ohne eine kostenintensive Verschärfung der Toleranzen sich ein optisch einwandfreies Fugenbild ergibt.

## Patentansprüche

1. Kraftfahrzeugtür (1), welche zum Fahrgastinnenraum (2) eines Kraftfahrzeuges hin eine Verkleidung (3) aufweist, wobei die Verkleidung mit einem Lagerbock (4) verbindbar ist, in welchem ein Betätigungshebel (5) um eine Drehachse (6) schwenkbar gelagert ist, wobei zwischen Betätigungshebel und Verkleidung zumindest bereichsweise eine Fuge (7a; 7b) gegeben ist,
**dadurch gekennzeichnet, dass** die Achse (6) zusätzlich über Fixierlager (8a; 8b) mit der Verkleidung verbunden ist.

2. Tür nach Anspruch 1, **dadurch gekennzeichnet, dass** die Verkleidung (3) aus Polypropylen ist.

3. Tür nach einem der vorhergehenden Ansprüche, **dadurch gekennzeichnet, dass** die Verkleidung (3) mehrteilig ist.

4. Tür nach einem der vorhergehenden Ansprüche, **dadurch gekennzeichnet, dass** die Verkleidung (3) aus einem ersten (3a) und zweiten (3b) Teil besteht, welche beide eine zum Fahrzeuginnenraum (2) gerichtete Oberfläche aufweisen.

5. Tür nach Anspruch 4, **dadurch gekennzeichnet, dass** das erste Teil als Oberteil (3a) ausgeführt ist, welches eine innere Fensterbrüstung der Kraftfahrzeugtür bildet und das Unterteil von einem Grundträger (3b) gebildet wird, welcher sich hieran nach unten und anschließend bis zur Türunterkante fortsetzt.

6. Tür nach einem der Ansprüche 4 oder 5, **dadurch gekennzeichnet, dass** am zweiten Teil (3b) Schraubdome (9a; 9b) oder dergleichen angeordnet sind zum kraftschlüssigen Befestigen des Lagerbocks am zweiten Teil, und dass am ersten Teil (3a) die Fixierlager (8a; 8b) zum eindeutigen Positionieren der Achse (6) bezüglich der Verkleidung angebracht sind.

7. Tür nach einem der vorhergehenden Ansprüche, **dadurch gekennzeichnet, dass** der Lagerbock (4) bezüglich der Verkleidung zur Fahrzeugaußenseite (10) hin versenkt ist.

8. Tür nach einem der vorhergehenden Ansprüche, **dadurch gekennzeichnet, dass** der Lagerbock (4) aus Polyamid ist.

9. Tür nach einem der vorhergehenden Ansprüche, **dadurch gekennzeichnet, dass** die Fixierlager als einseitig offene Aufnahmen (8a; 8b) ausgeführt sind.

10. Tür nach einem der vorhergehenden Ansprüche, **dadurch gekennzeichnet, dass** die Achse (6) aus Kunststoff oder Metall ist.

11. Tür nach einem der vorhergehenden Ansprüche, **dadurch gekennzeichnet, dass** der Betätigungshebel (5) aus Polyamid ist.

12. Tür nach einem der vorhergehenden Ansprüche, **dadurch gekennzeichnet, dass** der Betätigungshebel in Querschnittsrichtung senkrecht zur Fahrzeuglängsachse (11) im Wesentlichen bündig mit der Verkleidung abschließt (Fig. 2a).

## Claims

1. A motor-vehicle door (1) having a lining (3) facing the passenger compartment (2) of a motor vehicle, wherein the lining is connectable to a bearing mounting (4) in which an operating lever (5) is mounted so as to be pivotable about an axis of rotation (6), wherein a gap (7a; 7b) is provided, at least in areas, between the operating lever and the lining, **characterised in that** the pivot (6) is in addition connected to the lining via fixing bearings (8a; 8b).

2. A door according to claim 1, **characterised in that** the lining (3) is of polypropylene.

3. A door according to any one of the preceding claims, **characterised in that** the lining (3) is multi-part.

4. A door according to any one of the preceding claims, **characterised in that** the lining (3) consists of a first part (3a) and a second part (3b), both of which have a surface directed towards the passenger compartment.

5. A door according to claim 4, **characterised in that** the first part is in the form of an upper part (3a) which forms an inner window-breast of the motor-vehicle door and the lower part is formed by a base support (3b) which continues thereon downwards and then as far as the door lower-edge.

6. A door according to one of claims 4 and 5, **characterised in that** screw domes (9a; 9b) or the like are arranged on the second part (3b) to secure the bearing mounting to the second part in a non-positive locking manner, and **in that** the fixing bearings (8a; 8b) for clear positioning of the pivot (6) in relation to the lining are attached to the first part (3a).

7. A door according to any one of the preceding claims, **characterised in that** the bearing mounting (4) is sunk-in towards the vehicle exterior with respect to the lining.

8. A door according to any one of the preceding claims, **characterised in that** the bearing mounting (4) is of polyamide.

9. A door according to any one of the preceding claims, **characterised in that** the fixing bearings are in the form of receivers (8a; 8b) open at one side.

10. A door according to any one of the preceding claims, **characterised in that** the pivot (6) is composed of plastics material or metal.

11. A door according to any one of the preceding claims, **characterised in that** the operating lever (5) is of polyamide.

12. A door according to any one of the preceding claims, **characterised in that** in a cross-sectional direction perpendicular to the vehicle longitudinal axis (11), the operating lever is substantially flush with the lining (Fig. 2a).

## Revendications

1. Portière d'automobile (1), qui présente un revêtement (3) vers l'intérieur (2) d'un véhicule automobile, le revêtement pouvant être relié à un support de palier (4), dans lequel un levier d'actionnement (5) est logé de manière pivotante autour d'un axe de rotation (6), sachant qu'il y a au moins dans un secteur un interstice (7a ; 7b) entre le levier d'actionnement et le revêtement,
**caractérisée en ce que**
l'axe (6) est relié en plus au revêtement par le biais de paliers de fixation (8a ; 8b).

2. Portière selon la revendication 1, **caractérisée en ce que** le revêtement (3) est en polypropylène.

3. Portière selon l'une quelconque des revendications précédentes, **caractérisée en ce que** le revêtement (3) se compose de plusieurs parties.

4. Portière selon l'une quelconque des revendications précédentes, **caractérisée en ce que** le revêtement (3) se compose d'une première (3a) et d'une deuxième (3b) partie, présentant toutes deux, une surface dirigée vers l'intérieur du véhicule (2).

5. Portière selon la revendication 4, **caractérisée en ce que** la première partie est réalisée sous forme de partie supérieure (3a) qui forme une allège intérieure de la portière d'automobile et la partie inférieure est formée par un support de base (3b), qui se poursuit de là vers le bas et ensuite jusqu'au bord inférieur de la portière.

6. Portière selon l'une quelconque des revendications 4 ou 5, **caractérisée en ce que** des dômes de vissage (9a ; 9b) ou similaires sont agencés au niveau de la deuxième partie (3b) pour fixer le support de palier par liaison de force sur la deuxième partie et **en ce que** les paliers de fixation (8a ; 8b) sont montés sur la première partie (3a) pour le positionnement univoque de l'axe (6) par rapport au revêtement.

7. Portière selon l'une quelconque des revendications précédentes, **caractérisée en ce que** le support de palier (4) est encastré vers le côté extérieur du véhicule (10) par rapport au revêtement.

8. Portière selon l'une quelconque des revendications précédentes, **caractérisée en ce que** le support de palier (4) est en polyamide.

9. Portière selon l'une quelconque des revendications précédentes, **caractérisée en ce que** les paliers de fixation sont réalisés sous forme de logements (8a ; 8b) ouverts d'un côté.

10. Portière selon l'une quelconque des revendications précédentes, **caractérisée en ce que** l'axe (6) est en plastique ou en métal.

11. Portière selon l'une quelconque des revendications précédentes, **caractérisée en ce que** le levier d'actionnement (5) est en polyamide.

12. Portière selon l'une quelconque des revendications précédentes, **caractérisée en ce que** le levier d'actionnement se termine sensiblement à fleur avec le revêtement dans le sens de la section transversale perpendiculairement à l'axe longitudinal du véhicule (11) (figure 2a).
